# EUROPEAN PATENT APPLICATION

(11) **EP 4 317 516 A1**
(43) Date of publication of application: **07.02.2024**
(21) Application number: 22804683.5
(22) Date of filing: 17.05.2022
(51) Int. Cl.: C23C 2/02, C21D 9/46, C22C 38/00, C22C 38/02, C22C 38/60, C23C 2/06, C23C 2/40, C23C 28/00, C25D 5/26

(54) **FE-BASED ELECTROPLATED STEEL SHEET, HOT-DIP GALVANIZED STEEL SHEET, AND METHODS FOR MANUFACTURING SAME**

(30) Priority: 17.05.2021 JP 2021083174
(71) Applicant: JFE Steel Corporation, Tokyo 100-0011 (JP)
(72) Inventor: MAKIMIZU, Yoichi, Tokyo 100-0011 (JP); YAMAMOTO, Shunsuke, Tokyo 100-0011 (JP); OKUMURA, Yusuke, Tokyo 100-0011 (JP); HOSHINO, Katsuya, Tokyo 100-0011 (JP); OKUMURA, Ei, Tokyo 100-0011 (JP); TAKASHIMA, Katsutoshi, Tokyo 100-0011 (JP)
(74) Representative: Grünecker Patent- und Rechtsanwälte PartG mbB
(86) International application number: PCT/JP2022/020528
(87) International publication number: WO 2022/244772

(57) **Abstract**

A base steel sheet containing Si in an amount of 0.50 to 3.00 mass% is subjected to an Fe-based electroplating treatment using an Fe-based electroplating solution containing Fe ions and transition metal ions other than the Fe ions to form an Fe-based electroplated layer, and then to an annealing treatment. In the Fe-based electroplating solution, a content of the Fe ions is 1.0 mass% or more and a content of the transition metal ions is 10 to 1000 mass ppm. A coating amount of the Fe-based electroplated layer per one surface of the base steel sheet is 1.0 g/m² or more. Thus, a steel sheet having high strength and excellent resistance to resistance-weld cracking of a welded portion is obtained.

## Description

### TECHNICAL FIELD

The present invention relates to an Fe-based electroplated steel sheet, a hot-dip galvanized steel sheet, and a method for producing the same.

### BACKGROUND ART

In recent years, from the viewpoint of the protection of global environment, improvement in the fuel efficiency of an automobile has been strongly demanded.

From the viewpoint of ensuring the safety of passengers at the time of collision, improvement in the safety of the automobile is also strongly required.

In order to meet these requirements, it is necessary to achieve both the weight reduction and strength enhancement of an automobile body, and a steel sheet which is a material of an automobile component is actively thinned through strength enhancement.

Furthermore, many automobile components are produced by forming a steel sheet (for example, press forming), and therefore a steel sheet which is a material of an automobile component is also required to have excellent formability.

Examples of a method for achieving strength enhancement without significantly impairing the formability of the steel sheet include solid solution strengthening by the addition of Si.

In the production of automobile components, press-formed components are often combined by resistance welding (spot welding) (see Patent Literature 1).

### CITATION LIST

### PATENT LITERATURE

Patent Literature 1: WO2019/116531 A

### SUMMARY OF INVENTION

### TECHNICAL PROBLEMS

When a component to be resistance-welded includes a hot-dip galvanized steel sheet, the following problems are concerned.

That is, during resistance welding, residual stress is generated in the vicinity of a welded portion, and in this state, zinc of a plating layer melts and diffuses into crystal grain boundaries, and therefore liquid metal embrittlement (LME) may occur, and grain boundary cracks (LME cracks) may occur in a steel sheet.

In particular, when welding is performed in a state where an electrode for welding is angled with respect to the steel sheet, there is a possibility that residual stress increases and cracks are likely to occur.

The residual stress is considered to increase as the strength of the steel sheet increases, and therefore it is concerned that many LME cracks occur as the strength of the steel sheet increases.

The LME cracks can be roughly classified into "cracks occurring in a surface in contact with an electrode" (hereinafter, referred to as "surface cracks") and "cracks occurring near a corona bond between steel sheets" (hereinafter, referred to as "inner cracks").

Since the surface cracks are likely to occur during resistance welding in a high current range where sputtering occurs, it is possible to suppress the surface cracks by setting the current range to an appropriate current range where the sputtering does not occur. Meanwhile, the internal cracks occur even when a current during resistance welding is within a range in which the sputtering does not occur. The surface cracks are easily found by appearance inspection, whereas the inner cracks are hardly found by the appearance inspection.

For these reasons, among the LME cracks, in particular, the inner cracks become a major problem.

Even if a steel sheet is not a hot-dip galvanized steel sheet, such LME cracks may occur when a counterpart to be resistance-welded to a steel sheet is a hot-dip galvanized steel sheet.

For this reason, when the counterpart to be resistance-welded is a hot-dip galvanized steel sheet or when the steel sheet itself is a hot-dip galvanized steel sheet, resistance to such cracks (hereinafter, referred to as "resistance to resistance-weld cracking of welded portion") is required to be excellent.

The present invention has been made in view of the above points, and an object of the present invention is to obtain a steel sheet having high strength and excellent resistance to resistance-weld cracking of a welded portion.

### SOLUTION TO PROBLEMS

The present inventors have found that the above object is achieved by adopting the following configuration, and have completed the present invention.

[1] A method for producing an Fe-based electroplated steel sheet, the method comprising:
   subjecting a base steel sheet containing Si in an amount of 0.50 to 3.00 mass% to an Fe-based electroplating treatment using an Fe-based electroplating solution containing Fe ions and transition metal ions other than the Fe ions to form an Fe-based electroplated layer, and then subjecting the base steel sheet to an annealing treatment,
   wherein, in the Fe-based electroplating solution, a content of the Fe ions is 1.0 mass% or more and a content of the transition metal ions is 10 to 1000 mass ppm, and
   a coating amount of the Fe-based electroplated layer per one surface of the base steel sheet is 1.0 g/m² or more.
[2] The method for producing an Fe-based electroplated steel sheet according to [1],
   wherein the base steel sheet has a chemical composition containing,
   Si in an amount of 0.50 mass% or more and 3.00 mass% or less,
   C in an amount of 0.80 mass% or less,
   Mn in an amount of 1.50 mass% or more and 3.50 mass% or less,
   P in an amount of 0.100 mass% or less,
   S in an amount of 0.0300 mass% or less, and
   Al in an amount of 0.100 mass% or less, with a remaining part consisting of Fe and inevitable impurities.
[3] The method for producing an Fe-based electroplated steel sheet according to [2],
   wherein the chemical composition further contains at least one element selected from the group consisting of:
   B in an amount of 0.0050 mass% or less,
   Ti in an amount of 0.200 mass% or less,
   N in an amount of 0.0100 mass% or less,
   Cr in an amount of 1.000 mass% or less,
   Cu in an amount of 1.000 mass% or less,
   Ni in an amount of 1.000 mass% or less,
   Mo in an amount of 1.000 mass% or less,
   Nb in an amount of 0.200 mass% or less,
   V in an amount of 0.500 mass% or less,
   Sb in an amount of 0.200 mass% or less,
   Ta in an amount of 0.100 mass% or less,
   W in an amount of 0.500 mass% or less,
   Zr in an amount of 0.1000 mass% or less,
   Sn in an amount of 0.200 mass% or less,
   Ca in an amount of 0.0050 mass% or less,
   Mg in an amount of 0.0050 mass% or less, and
   REM in an amount of 0.0050 mass% or less.
[4] The method for producing an Fe-based electroplated steel sheet according to any one of [1] to [3], wherein the transition metal ions contained in the Fe-based electroplating solution are ions of at least one transition metal selected from the group consisting of Ti, V, Cr, Mn, Ni, Cu, Nb, Mo, and W.
[5] The method for producing an Fe-based electroplated steel sheet according to any one of [1] to [3], wherein a coating amount of the Fe-based electroplated layer per one surface of the base steel sheet is 5.0 to 20.0 g/m².
[6] A method for producing a hot-dip galvanized steel sheet, the method comprising subjecting an Fe-based electroplated steel sheet obtained by the method according to any one of [1] to [3] to a hot-dip galvanizing treatment.
[7] The method for producing a hot-dip galvanized steel sheet according to [6], further comprising subjecting the Fe-based electroplated steel sheet to an alloying treatment after the hot-dip galvanizing treatment.
[8] An Fe-based electroplated steel sheet comprising:
   a base steel sheet containing Si in an amount of 0.50 to 3.00 mass%; and
   an Fe-based electroplated layer disposed on at least one surface of the base steel sheet,
   wherein a coating amount of the Fe-based electroplated layer per one surface of the base steel sheet is 1.0 g/m² or more,
   an average crystal grain size of the Fe-based electroplated layer at an interface between the Fe-based electroplated layer and the base steel sheet is 1.00 µm or less,
   the Fe-based electroplated layer contains a transition metal other than Fe, and
   a content of the transition metal in the Fe-based electroplated layer is 100 to 10000 mass ppm.
[9] The Fe-based electroplated steel sheet according to [8], wherein the transition metal is at least one transition metal selected from the group consisting of Ti, V, Cr, Mn, Ni, Cu, Nb, Mo, and W.
[10] The Fe-based electroplated steel sheet according to [8] or [9], wherein the Fe-based electroplated steel sheet is resistance-welded with a hot-dip galvanized steel sheet.
[11] A hot-dip galvanized steel sheet comprising:
   the Fe-based electroplated steel sheet according to [8] or [9]; and
   a hot-dip galvanized layer disposed on the Fe-based electroplated layer included in the Fe-based electroplated steel sheet.

### ADVANTAGEOUS EFFECTS OF INVENTION

According to the present invention, a steel sheet having high strength and excellent resistance to resistance-weld cracking of a welded portion is obtained.

### BRIEF DESCRIPTION OF DRAWINGS

[FIG. 1] FIG. 1 is a SIM image showing a base steel sheet of No. 30 and an Fe-based electroplated layer.
[FIG. 2] FIG. 2 is a SIM image showing a base steel sheet of No. 31 and an Fe-based electroplated layer.
[FIG. 3] FIG. 3 is a cross-sectional view showing a sheet assembly used for resistance welding.
[FIG. 4] FIG. 4 is a plan view showing the sheet assembly after resistance welding.
[FIG. 5] FIG. 5 is a cross-sectional view taken along line A-A of FIG. 4.

### DESCRIPTION OF EMBODIMENTS

In the present description, a numerical range represented using "to" means a range including numerical values described before and after "to" as a lower limit value and an upper limit value, respectively.

Herein, "high strength" of a steel sheet means that the tensile strength TS of the steel sheet measured in accordance with JIS Z 2241 (2011) is 590 MPa or more.

### [Findings Obtained by Present Inventors]

Conventionally, an attempt has been made to improve the resistance to resistance-weld cracking of a welded portion only by surface layer control on a steel sheet side.

However, the present inventors have considered that it is practically difficult to satisfy a high level resistance to resistance-weld cracking of the welded portion only by the surface layer control on the steel sheet side. Then, the present inventors conceived the control of the characteristics of an Fe-based electroplated layer.

The present inventors have conducted intensive studies. As a result, the present inventors have found that it is important to form a certain amount of Fe-based electroplated layer using an Fe-based electroplating solution containing a specific amount of Fe ions and transition metal ions as pre-plating on the surface of a steel sheet (base steel sheet) before being subjected to a continuous treatment and to make crystal grains of the Fe-based electroplated layer fine in the subsequent annealing treatment in order to satisfy the resistance to resistance-weld cracking of the welded portion at a high level.

By providing a certain amount of Fe-based electroplated layer on the surface of the base steel sheet, the resistance to resistance-weld cracking of the welded portion is improved.

The mechanism is not clear, but is presumed as follows.

First, the Fe-based electroplated layer functions as a soft layer, thereby alleviating stress applied to the surface of the base steel sheet during welding. As a result, the residual stress of the welded portion is reduced, and therefore the resistance to resistance-weld cracking (in particular, the characteristic of preventing internal cracks) of the welded portion can be improved (stress relaxation effect).

Incidentally, when the amount of solid solution Si in the surface of the base steel sheet is large, it is considered that the toughness of the welded portion is reduced, and the resistance to resistance-weld cracking of the welded portion is deteriorated.

On the contrary, when a certain amount or more of Fe-based electroplated layer is provided on the surface of the base steel sheet, the Fe-based electroplated layer functions as a solid-solution Si-deficient layer, and the amount of Si solid-solution in the welded portion is reduced.

For this reason, reduction in the toughness of the welded portion is suppressed, and therefore the resistance to resistance-weld cracking (in particular, the characteristic of preventing internal cracks) of the welded portion is improved (toughness reduction suppressing effect).

When the Fe-based electroplated layer is formed and then subjected to an annealing treatment, the crystal grain size of the Fe-based electroplated layer may be coarsened. In this case, zinc dissolved during resistance welding easily enters the crystal grain boundary of the base steel sheet via the crystal grain boundary of the Fe-based electroplated layer.

Therefore, a specific amount of transition metal ions other than Fe ions is added in an Fe-based electroplating solution used for an Fe-based electroplating treatment.

As a result, the crystal growth of the Fe-based electroplated layer is inhibited, and therefore the crystal grains of the Fe-based electroplated layer become fine.

Although the mechanism by which the crystal growth is inhibited is not clear, it is considered that when the added transition metal ions are taken into the Fe-based electroplated layer and fine precipitates are formed at the crystal grain boundaries, the crystal growth is inhibited.

When the crystal grains of the Fe-based electroplated layer are fine, a large number of crystal grain boundaries are formed. As a result, the penetration of molten zinc is dispersed, and therefore a time to reach the crystal grain boundaries of the base steel sheet is delayed. Thus, the resistance to resistance-weld cracking of the welded portion is improved.

The present invention has been made based on the above findings.

### [Method for Producing Fe-Based Electroplated Steel Sheet]

In a method for producing an Fe-based electroplated steel sheet according to the present embodiment, a base steel sheet containing Si in an amount of 0.50 to 3.00 mass% is subjected to an Fe-based electroplating treatment using an Fe-based electroplating solution containing Fe ions and transition metal ions other than Fe ions to form an Fe-based electroplated layer, and then subjected to an annealing treatment. In the Fe-based electroplating solution, the content of the Fe ions is 1.0 mass% or more, and the content of the transition metal ions is 10 to 1000 mass ppm. The coating amount of the Fe-based electroplated layer per one surface of the base steel sheet is 1.0 g/m² or more.

### <Base Steel Sheet>

The base steel sheet may be, for example, a hot-rolled steel sheet or a cold-rolled steel sheet.

The sheet thickness of the base steel sheet is not particularly limited, and is, for example, 0.6 to 3.2 mm, and preferably 0.8 to 2.4 mm.

### <<Chemical Composition>>

The chemical composition of the base steel sheet will be described.

The unit of the content of each element in the chemical composition of the base steel sheet is "mass%", and the unit "mass%" is simply expressed as "%" unless otherwise specified.

### (Si: 0.50% or more and 3.00% or less)

Si is an element effective for achieving the high strength of a steel sheet because Si has a large effect of increasing the strength of steel by solid solution (solid solution strengthening ability) without significantly impairing the workability of the steel. For this reason, from the viewpoint of increasing the strength of the steel sheet, the amount of Si is 0.50% or more, preferably 0.70% or more, and more preferably 0.90% or more.

Meanwhile, Si is also an element that adversely affects the resistance to resistance-weld cracking of the welded portion. When the amount of Si is excessive, the hot rolling performance and cold rolling performance of the steel sheet are greatly deteriorated, which may adversely affect the productivity of the steel sheet or cause a decrease in the ductility of the steel sheet itself. For this reason, the amount of Si is 3.00% or less, preferably 2.50% or less, and more preferably 2.00% or less.

The base steel sheet is required to contain Si within the above range, but except the above, the chemical composition is not particularly limited as long as it is a normal chemical composition. However, from the viewpoint of, for example, increasing the strength of the Fe-based electroplated steel sheet to be obtained, the following chemical composition is preferably used.

### (C: 0.80% or less)

C causes the formation of martensite or the like as a steel structure, and thus improves the workability of the base steel sheet.

When C is added, in order to obtain good weldability, the amount of C is preferably 0.80% or less, and more preferably 0.30% or less.

The lower limit of the amount of C is not particularly limited, but in order to obtain good workability of the base steel sheet, the amount of C is preferably 0.03% or more, and more preferably 0.05% or more.

### (Mn: 1.50% or more and 3.50% or less)

Mn leads to solid-solution strengthening of the steel to increase the strength of the steel. Furthermore, Mn enhances the hardenability of the steel and promotes the formation of retained austenite, bainite, and martensite. In order to obtain such an effect, the amount of Mn is preferably 1.50% or more, and more preferably 1.80% or more.

Meanwhile, the excessive addition of Mn causes an increase in cost. For this reason, the amount of Mn is preferably 3.50% or less, and more preferably 3.30% or less, from the viewpoint of obtaining the above effect without causing an increase in cost.

### (P: 0.100% or less)

By suppressing an amount of P, deterioration in the weldability of the steel can be prevented. Furthermore, the segregation of P to grain boundaries can be prevented to prevent deterioration in the ductility, bendability, and toughness of the steel. An excessive amount of P promotes ferrite transformation, and therefore the crystal grain size increases. For this reason, the amount of P is preferably 0.100% or less, and more preferably 0.050% or less.

The lower limit of the amount of P is not particularly limited, but the amount of P is, for example, more than 0% under restrictions on production technique, and may be 0.001% or more.

### (S: 0.0300% or less)

By suppressing an amount of S, deterioration in the weldability of the steel can be prevented. Furthermore, a decrease in hot ductility can be prevented to suppress hot cracking, and the surface properties can be significantly improved. When an amount of S is excessive, the ductility, bendability, and stretch flangeability and the like of the steel sheet may be deteriorated due to the formation of coarse sulfide as an impurity element. Therefore, it is preferable to reduce the amount of S as much as possible. Specifically, the amount of S is preferably 0.0300% or less, and more preferably 0.0200% or less.

The lower limit of the amount of S is not particularly limited, but the amount of S is, for example, more than 0% under restrictions on production technique, and may be 0.0001% or more.

### (Al: 0.100% or less)

Since Al is most easily thermodynamically oxidized, Al is oxidized prior to Si and Mn, so that the oxidation of Si and Mn in the outermost layer of the steel sheet is suppressed, and the oxidation of Si and Mn inside the steel sheet is promoted.

However, an excessive amount of Al causes an increase in cost. For this reason, when Al is added, the amount of Al is preferably 0.100% or less, and more preferably 0.060% or less.

The lower limit of the amount of Al is not particularly limited, but the amount of Al is, for example, more than 0%, and may be 0.001% or more. From the viewpoint of obtaining the effect of adding Al, the amount of Al is preferably 0.010% or more, and more preferably 0.020% or more.

### (Other Elements)

The chemical composition of the base steel sheet may further contain at least one element selected from the group consisting of elements described below in mass%.

### ((B: 0.0050% or less))

When an amount of B is excessive, the formability of the steel sheet may be deteriorated. For this reason, from the viewpoint of obtaining good formability, the amount of B is preferably 0.0050% or less, and more preferably 0.0030% or less.

Meanwhile, B is an element effective for improving the hardenability of the steel. From the viewpoint of improving the hardenability, the amount of B is preferably 0.0003% or more, and more preferably 0.0005% or more.

### ((Ti: 0.200% or less))

When an amount of Ti is excessive, a hard phase becomes excessive, and the formability of the steel sheet may be deteriorated. For this reason, from the viewpoint of obtaining good formability, the amount of Ti is preferably 0.200% or less, and more preferably 0.050% or less.

The lower limit of the amount of Ti is not particularly limited, but from the viewpoint of obtaining the effect of the strength adjustment of the steel, the amount of Ti is preferably 0.005% or more, and more preferably 0.010% or more.

### ((N: 0.0100% or less))

When an amount of N is excessive, N forms coarse nitride at a high temperature with Ti, Nb, and V, so that the effect of increasing the strength of the steel sheet owing to the addition of Ti, Nb, and V may be impaired, the toughness of the steel sheet may be reduced, or slab cracking or surface defects or the like may occur during hot rolling. Therefore, the amount of N is preferably 0.0100% or less, more preferably 0.0050% or less, still more preferably 0.0030% or less, and particularly preferably 0.0020% or less.

The lower limit of the amount of N is not particularly limited, but the amount of N is, for example, more than 0% under restrictions on production technique, and may be 0.0005% or more.

### ((Cr: 1.000% or less))

The addition of Cr can improve the hardenability of the steel sheet to improve the balance between the strength and ductility of the steel sheet.

However, when Cr is added, the amount of Cr is preferably 1.000% or less, and more preferably 0.700% or less, from the viewpoint of preventing an increase in cost.

Meanwhile, from the viewpoint of obtaining the effect of adding Cr, the amount of Cr is preferably 0.005% or more, more preferably 0.050% or more, and still more preferably 0.200% or more.

### ((Cu: 1.000% or less))

By adding Cu, the formation of a residual γ phase in the steel sheet can be promoted.

However, when Cu is added, the amount of Cu is preferably 1.000% or less, and more preferably 0.700% or less, from the viewpoint of preventing an increase in cost.

Meanwhile, from the viewpoint of obtaining the effect of adding Cu, the amount of Cu is preferably 0.005% or more, more preferably 0.010% or more, and still more preferably 0.030% or more.

### ((Ni: 1.000% or less))

By adding Ni, the formation of a residual γ phase in the steel sheet can be promoted.

However, when Ni is added, the amount of Ni is preferably 1.000% or less, and more preferably 0.700% or less, from the viewpoint of preventing an increase in cost.

Meanwhile, from the viewpoint of obtaining the effect of adding Ni, the amount of Ni is preferably 0.005% or more, more preferably 0.010% or more, and still more preferably 0.030% or more.

### ((Mo: 1.000% or less))

The strength of the steel sheet can be adjusted by adding Mo.

However, when Mo is added, the amount of Mo is preferably 1.000% or less, and more preferably 0.700% or less, from the viewpoint of preventing an increase in cost.

Meanwhile, from the viewpoint of obtaining the effect of adding Mo, the amount of Mo is preferably 0.005% or more, more preferably 0.010% or more, and still more preferably 0.050% or more.

### ((Nb: 0.200% or less))

By adding Nb, the effect of improving the strength of the steel sheet can be obtained.

However, when Nb is added, the amount of Nb is preferably 0.200% or less, and more preferably 0.150% or less, from the viewpoint of preventing an increase in cost.

Meanwhile, from the viewpoint of obtaining the effect of adding Nb, the amount of Nb is preferably 0.005% or more, and more preferably 0.010% or more.

### ((V: 0.500% or less))

By adding V, the effect of improving the strength of the steel sheet can be obtained.

However, when V is contained, the amount of V is preferably 0.500% or less, and more preferably 0.300% or less, from the viewpoint of preventing an increase in cost.

Meanwhile, from the viewpoint of obtaining the effect of adding V, the amount of V is preferably 0.005% or more, and more preferably 0.010% or more.

### ((Sb: 0.200% or less))

In order to obtain good toughness, the amount of Sb is preferably 0.200% or less, and more preferably 0.100% or less.

Meanwhile, by adding Sb, the nitridization and oxidation of the surface of the steel sheet can be suppressed, and decarburization in a region of several tens of microns of the surface of the steel sheet caused by oxidation can be suppressed. Sb suppresses the nitridization and oxidation of the surface of the steel sheet, thereby preventing a decrease in the amount of martensite generated on the surface of the steel sheet and improving the fatigue characteristics and surface quality of the steel sheet. In order to obtain such an effect, the amount of Sb is preferably 0.001% or more, and more preferably 0.010% or more.

### ((Ta: 0.100% or less))

By adding Ta, the effect of improving the strength of the steel sheet can be obtained.

However, when Ta is added, the amount of Ta is preferably 0.100% or less, and more preferably 0.050% or less, from the viewpoint of preventing an increase in cost.

Meanwhile, from the viewpoint of obtaining the effect of adding Ta, the amount of Ta is preferably 0.001% or more, and more preferably 0.010% or more.

### ((W: 0.500% or less))

By adding W, the effect of improving the strength of the steel sheet can be obtained.

However, when W is added, the amount of W is preferably 0.500% or less, and more preferably 0.300% or less, from the viewpoint of preventing an increase in cost.

Meanwhile, from the viewpoint of obtaining the effect of adding W, the amount of W is preferably 0.005% or more, and more preferably 0.010% or more.

### ((Zr: 0.1000% or less))

By adding Zr, the effect of improving the strength of the steel sheet can be obtained.

However, when Zr is added, the amount of Zr is preferably 0.1000% or less, and more preferably 0.0500% or less, from the viewpoint of preventing an increase in cost.

Meanwhile, from the viewpoint of obtaining the effect of adding Zr, the amount of Zr is preferably 0.0005% or more, more preferably 0.0010% or more, and still more preferably 0.0050% or more.

### ((Sn: 0.200% or less))

In order to obtain good impact resistance, the amount of Sn is preferably 0.200% or less, and more preferably 0.100% or less.

Meanwhile, Sn is an element effective in suppressing denitrification, deboronization and the like to suppress a decrease in the strength of the steel. In order to obtain such an effect, the amount of Sn is preferably 0.002% or more, and more preferably 0.010% or more.

### ((Ca: 0.0050% or less))

From the viewpoint of improving the ductility of the steel sheet, the amount of Ca is preferably 0.0050% or less, and more preferably 0.0030% or less.

Meanwhile, the amount of Ca is preferably 0.0005% or more, and more preferably 0.0010% or more, for the reason that the morphology of sulfide can be controlled to improve the ductility and toughness of the steel sheet.

### ((Mg: 0.0050% or less))

By adding Mg, the morphology of sulfide can be controlled to improve the ductility and toughness of the steel sheet.

However, when Mg is added, the amount of Mg is preferably 0.0050% or less, and more preferably 0.0030% or less, from the viewpoint of preventing an increase in cost.

Meanwhile, from the viewpoint of obtaining the effect of adding Mg, the amount of Mg is preferably 0.0005% or more, and more preferably 0.0010% or more.

### ((REM: 0.0050% or less))

When rare earth metal (REM) is added, the amount of REM is preferably 0.0050% or less, and more preferably 0.0030% or less, from the viewpoint of obtaining good toughness of the steel sheet.

Meanwhile, the amount of REM is preferably 0.0005% or more, and more preferably 0.0010% or more, for the reason that the morphology of sulfide can be controlled to improve the ductility and toughness of the steel sheet.

### (Remaining Part)

The remaining part other than the above-described components (elements) in the chemical composition of the base steel sheet consists of Fe and inevitable impurities.

The base steel sheet can be produced by a known method.

For example, when the base steel sheet is a hot-rolled steel sheet, a slab having the above-described chemical composition is hot-rolled to obtain a hot-rolled steel sheet. The slab may be heated prior to hot rolling.

When the base steel sheet is a cold-rolled steel sheet, the obtained hot-rolled steel sheet is optionally subjected to pickling and then cold rolling to obtain a cold-rolled steel sheet.

The base steel sheet thus produced is optionally subjected to degreasing and water washing before being subjected to an Fe-based electroplating treatment described later. Thus, the surface of the base steel sheet is cleaned. The base steel sheet may be subjected to pickling and water washing in order to activate the surface of the base steel sheet.

The method of degreasing and water washing is not particularly limited, and a normal method can be adopted.

The pickling method is also not particularly limited. Examples of acids used for pickling include sulfuric acid, hydrochloric acid, nitric acid, and a mixture thereof, and among them, sulfuric acid, hydrochloric acid, or a mixture thereof is preferable. The concentration of the acid is not particularly limited, but is preferably about 1 to 20 mass% in consideration of the ability to remove the oxide coating film, and prevention of skin roughness (surface defect) due to peracid washing, and the like. An antifoaming agent, a pickling accelerator, or a pickling inhibitor or the like may be added to the acid used for pickling.

### <Fe-Based Electroplating Treatment>

The base steel sheet is optionally subjected to the above-described degreasing or the like, and then subjected to an Fe-based electroplating treatment. Thus, an Fe-based electroplated layer is formed on at least one surface of the base steel sheet.

The coating amount of the Fe-based electroplated layer per one surface of the base steel sheet will be described later.

The Fe-based electroplated layer is preferably formed on each of both the front and back surfaces of the base steel sheet.

### <<Fe-Based Electroplating Solution>>

The Fe-based electroplating solution used for the Fe-based electroplating treatment contains Fe ions and transition metal ions excluding the Fe ions in specific amounts.

### (Fe Ions)

When an amount of Fe ions in the Fe-based electroplating solution is too small, the electrolysis efficiency of the Fe-based electroplating treatment decreases, which makes it difficult to obtain a desired amount of Fe-based electroplated layer, or, in order to obtain a desired amount of Fe-based electroplated layer, the Fe-based electroplating treatment is required to be performed for a long time or at a high current density, which leads to a decrease in the production efficiency of the steel sheet.

For this reason, the content of Fe ions in the Fe-based electroplating solution is 1.0 mass% or more, preferably 2.5 mass% or more, and more preferably 4.0 mass% or more.

Meanwhile, even if Fe ions are excessively contained in the Fe-based electroplating solution, the effect is saturated, which leads to an increase in the production cost of the steel sheet.

For this reason, the content of Fe ions in the Fe-based electroplating solution is preferably 10.0 mass% or less, and more preferably 7.5 mass% or less.

An Fe ion supply source for supplying Fe ions into the Fe-based electroplating solution is not particularly limited. For example, the content of Fe ions can be adjusted by dissolving an iron powder in an acidic electroplating solution or adding a sulfate or a chloride salt in the solution.

### (Transition Metal Ions)

As described above, the content of transition metal ions in the Fe-based electroplating solution is 10 mass ppm or more, for the reason that the crystal grains of the Fe-based electroplated layer become fine, and the resistance to resistance-weld cracking of the welded portion is excellent.

For the reason that this effect is more excellent, the content of transition metal ions in the Fe-based electroplating solution is preferably 30 mass ppm or more, more preferably 50 mass ppm or more, and still more preferably 100 mass ppm or more, although it depends on the type of transition metal ions.

Meanwhile, when an amount of transition metal ions in the Fe-based electroplating solution is excessive, a current during the Fe-based electroplating treatment is consumed not only for the precipitation of Fe but also for the precipitation of transition metals, and therefore the electrolysis efficiency decreases, which makes it difficult to obtain a desired amount of Fe-based electroplated layer. The cost of the electroplating solution also increases.

For this reason, the content of transition metal ions in the Fe-based electroplating solution is 1000 mass ppm or less, preferably 850 mass ppm or less, and more preferably 700 mass ppm or less.

The content of transition metal ions in the Fe-based electroplating solution is the total content of a plurality of types of ions when the transition metal ions are composed of a plurality of types of ions.

The transition metal ions contained in the Fe-based electroplating solution are not particularly limited as long as they are other than Fe ions, but from the viewpoint of forming finer precipitates in the Fe-based electroplated layer, ions of at least one transition metal selected from the group consisting of Ti, V, Cr, Mn, Ni, Cu, Nb, Mo, and W are preferable, and ions of at least one transition metal selected from the group consisting of Ti, V, Cr, Mn, Ni, and Cu are more preferable.

A transition metal ion supply source for supplying the transition metal ions into the Fe-based electroplating solution is not particularly limited. The content of transition metal ions can be adjusted by, for example, dissolving a powder of each transition metal in an acidic electroplating solution or adding a sulfate or a chloride salt in the solution.

The content of transition metal (including Fe) ions in the Fe-based electroplating solution is measured using an inductively coupled plasma (ICP) emission spectrometer. A calibration curve is prepared in advance using a solution whose transition metal concentration has been known, and the content of transition metal ions contained in the Fe-based electroplating solution is determined from the analysis results of the Fe-based electroplating solution with reference to the prepared calibration curve.

### (Other Components)

In addition to the Fe ions and the transition metal ions described above, the Fe-based electroplating solution may contain, for example, a conductivity auxiliary agent such as sodium sulfate or potassium sulfate; a chelating agent; or a pH buffering agent or the like.

### <<Other Conditions>>

The other conditions for the Fe-based electroplating treatment are not particularly limited.

The temperature of the Fe-based electroplating solution is preferably 30°C or higher in consideration of constant temperature retention property.

The pH of the Fe-based electroplating solution is preferably 3.0 or less in consideration of the electrical conductivity of the Fe-based electroplating solution.

The current density of the Fe-based electroplating treatment is normally 10 to 150 A/dm².

The sheet passing speed in the Fe-based electroplating treatment is preferably 5 mpm or more because of excellent productivity. Meanwhile, from the viewpoint of stably controlling the coating amount of the Fe-based electroplated layer, the sheet passing speed in the Fe-based electroplating treatment is preferably 150 mpm or less.

### <Annealing Treatment>

The base steel sheet on which the Fe-based electroplated layer is formed by the Fe-based electroplating treatment is hereinafter referred to as "Fe-based electroplated steel sheet before annealing" for convenience.

The Fe-based electroplated steel sheet before annealing is subjected to an annealing treatment under the following conditions. Thus, an Fe-based electroplated steel sheet is obtained. By removing the distortion of the base steel sheet generated by rolling and recrystallizing the structure by the annealing treatment, the strength of the obtained Fe-based electroplated steel sheet is increased.

The conditions for the annealing treatment may be general conditions and are not particularly limited, but it is preferable to heat the Fe-based electroplated steel sheet before annealing at the following annealing temperature for the following annealing time.

### <Annealing Temperature: 650°C or Higher and 900°C or Lower>

The annealing temperature is preferably 650°C or higher, and more preferably 700°C or higher. As a result, the recrystallization of the structure of the base steel sheet suitably proceeds, and therefore desired strength is easily obtained. A natural oxide film on the surface of the Fe-based electroplated layer is suitably reduced, and therefore the adhesion of a hot-dip galvanized layer (described later) formed on the Fe-based electroplated layer is excellent.

The annealing temperature is preferably 900°C or lower, and more preferably 850°C or lower. This makes it possible to prevent the diffusion rates of Si and Mn in the base steel sheet from being excessively increased. As a result, the diffusion of Si and Mn into the surface of the Fe-based electroplated layer is prevented, and therefore the adhesion of a hot-dip galvanized layer (described later) formed on the Fe-based electroplated layer is excellent. The furnace body damage of an annealing furnace can be prevented.

The annealing temperature is the highest achieving temperature of the Fe-based electroplated steel sheet before annealing during the annealing treatment, and is the measured temperature of the surface of the Fe-based electroplated steel sheet before annealing.

<<Annealing Time: 30 Seconds or More and 600 Seconds or Less>>

The annealing time is preferably 30 seconds or more, and more preferably 50 seconds or more. With this annealing time, a natural oxide film on the surface of the Fe-based electroplated layer is suitably removed, and therefore the adhesion of a hot-dip galvanized layer (described later) formed on the Fe-based electroplated layer is excellent.

The upper limit of the annealing time is not particularly limited, but when the annealing time is prolonged, the furnace length of the annealing furnace becomes long, and therefore the productivity of the steel sheet decreases. Accordingly, from the viewpoint of improving the productivity, the annealing time is preferably 600 seconds or less, and more preferably 300 seconds or less.

### <<Annealing Atmosphere>>

The annealing atmosphere (the atmosphere when the annealing treatment is performed) is preferably a reducing atmosphere containing hydrogen. Hydrogen in the annealing atmosphere suppresses the oxidation of the surface of the Fe-based electroplated layer, and activates the surface.

The hydrogen concentration in the annealing atmosphere is preferably 1.0 vol% or more, and more preferably 2.0 vol% or more. With this hydrogen concentration, the oxidation of the surface of the Fe-based electroplated layer is suitably prevented, and therefore the adhesion of a hot-dip galvanized layer (described later) formed on the Fe-based electroplated layer is excellent.

The upper limit of the hydrogen concentration in the annealing atmosphere is not particularly limited, but is preferably 30.0 vol% or less, and more preferably 20.0 vol% or less, from the viewpoint of cost.

A remaining part other than hydrogen in the annealing atmosphere is preferably nitrogen.

The dew point of the annealing atmosphere is preferably -50°C or higher because a too low dew point requires cost for removing moisture (dehumidifying). The dew point of the annealing atmosphere is more preferably - 30°C or higher, and still more preferably -20°C or higher, for the reason that the adhesion of the hot-dip galvanized layer described later is excellent.

As for the upper limit, the dew point of the annealing atmosphere is, for example, +30°C or lower, and preferably +10°C or lower.

### [Fe-Based Electroplated Steel Sheet]

The Fe-based electroplated steel sheet of the present embodiment is obtained by the method for producing an Fe-based electroplated steel sheet of the present embodiment described above, and schematically includes a base steel sheet and an Fe-based electroplated layer.

### <Base Steel Sheet>

Since the base steel sheet is the same as the base steel sheet described above, the description thereof will be omitted.

### <Fe-Based Electroplated Layer>

The Fe-based electroplated layer is a layer formed on at least one surface of the base steel sheet by the Fe-based electroplating treatment described above and having been subjected to the annealing treatment described above.

The Fe-based electroplated layer is preferably provided on each of both front and back surfaces of the base steel sheet.

### <<Coating Amount>>

The coating amount of the Fe-based electroplated layer per one surface of the steel sheet (hereinafter, also simply referred to as "coating amount of Fe-based electroplated layer") is 1.0 g/m² or more, and preferably 5.0 g/m² or more, for the reason that the resistance to resistance-weld cracking of the welded portion is excellent.

Meanwhile, the upper limit of the coating amount of the Fe-based electroplated layer is not particularly limited, but the coating amount of the Fe-based electroplated layer is preferably 20.0 g/m² or less, and more preferably 15.0 g/m² or less, from the viewpoint of cost.

The coating amount of the Fe-based electroplated layer is measured as follows.

A sample having a size of 10 × 15 mm is collected from an Fe-based electroplated steel sheet (alternatively, a hot-dip galvanized steel sheet described later), and embedded in a resin to obtain an embedded sample having an exposed cross section. Three optional points in this cross section are observed using a scanning electron microscope (SEM) under the conditions of an acceleration voltage of 15 kV and a magnification of 2000 to 10000 times depending on the thickness of the Fe-based electroplated layer. The average value of the thicknesses at the three fields of view is multiplied by the specific gravity of iron to be converted into the coating amount of the Fe-based electroplated layer.

### <<Average Crystal Grain Size>>

At the interface between the Fe-based electroplated layer and the base steel sheet, the crystal grains of the Fe-based electroplated layer need to be sufficiently fine. With this constitution, the resistance to resistance-weld cracking of the welded portion (in particular, the property of preventing internal cracks) is excellent.

Specifically, the average crystal grain size of the Fe-based electroplated layer at the interface between the Fe-based electroplated layer and the base steel sheet (hereinafter, also simply referred to as "average crystal grain size of Fe-based electroplated layer") is 1.00 um or less, preferably 0.85 µm or less, and more preferably 0.70 um or less.

The lower limit of the average crystal grain size is not particularly limited. However, when the crystal grain size of the Fe-based electroplated layer is small and the coating amount of the Fe-based electroplated layer is small, an easily oxidizable element contained in the base steel sheet may easily diffuse to the surface of the Fe-based electroplated layer. In this case, formation of oxides on the surface of the Fe-based electroplated layer may impair characteristics such as chemical convertibility and wettability with a hot-dip galvanizing bath solution. For this reason, the average crystal grain size of the Fe-based electroplated layer is preferably 0.05 um or more, and more preferably 0.10 um or more.

The average crystal grain size of the Fe-based electroplated layer at the interface between the Fe-based electroplated layer and the base steel sheet is measured as follows.

First, a sample having a size of 10 × 10 mm is collected from an Fe-based electroplated steel sheet. When a hot-dip galvanized layer described later is formed, only the hot-dip galvanized layer is removed from the sample by dissolving in accordance with ISO 17925.

In the collected sample, a 45° cross section having a length of 30 um in a direction perpendicular to the rolling direction and a length of 50 µm in a direction of 45° with respect to a T cross section (cross section parallel to the direction perpendicular to the rolling direction of the steel sheet and perpendicular to the surface of the steel sheet) direction is formed using a focused ion beam (FIB) apparatus to obtain an observation sample.

Then, a 45° cross section of the observation sample is observed at a magnification of 5000 times using a scanning ion microscope (SIM), and a SIM image is observed.

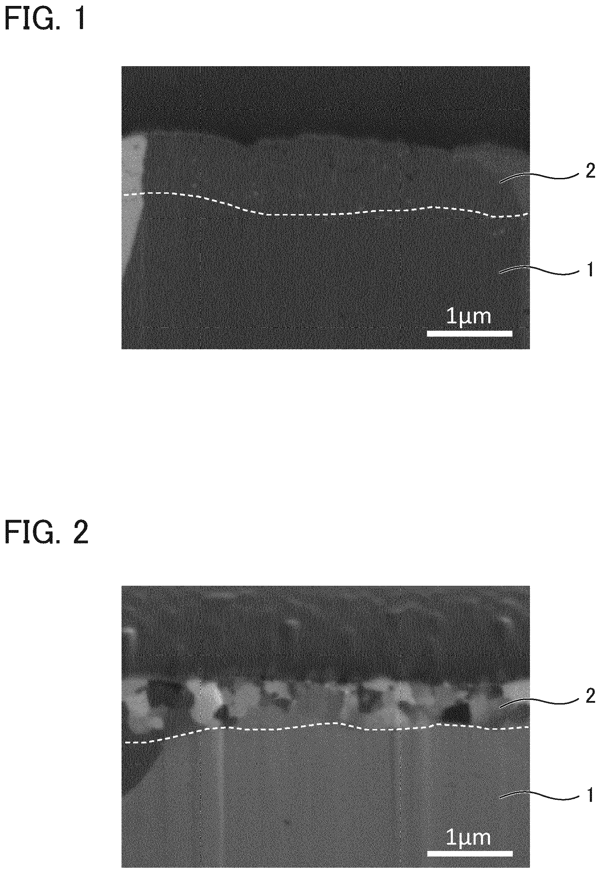

Examples of the observed SIM image are shown in FIGS. 1 and 2. FIG. 1 is a SIM image showing a base steel sheet 1 and an Fe-based electroplated layer 2 of No. 30 (Comparative Example) described later. FIG. 2 is a SIM image showing the base steel sheet 1 and the Fe-based electroplated layer 2 of No. 31 (Inventive Example) described later.

A straight line having a length of 5 µm and being parallel to the surface of the base steel sheet 1 is drawn at the intermediate position of the thickness of the Fe-based electroplated layer 2 observed in the SIM image, and the number of grain boundaries intersecting the straight line is measured. A value obtained by dividing the number by 5 um which is the length of the straight line is defined as "average crystal grain size of Fe-based electroplated layer at the interface between the Fe-based electroplated layer and the base steel sheet".

When the line on the surface of the base steel sheet 1 is not a straight line, a line approximated to the straight line is used.

The Fe-based electroplated layer shown in the SIM image (No. 30: Comparative Example) of FIG. 1 is formed using an Fe-based electroplating solution not containing transition metal ions, and crystal grains of the Fe-based electroplated layer are coarsely grown.

On the other hand, the Fe-based electroplated layer shown in the SIM image (No. 31: Inventive Example) of FIG. 2 is formed using an Fe-based electroplating solution having a Ti ion content of 100 mass ppm, and crystal grains thereof are fine.

### <<Transition Metal>>

Since the Fe-based electroplated layer is formed using the Fe-based electroplating solution described above, the Fe-based electroplated layer contains a transition metal (transition metal element) other than Fe.

For the reason that the resistance to resistance-weld cracking of the welded portion is excellent, the content of the transition metal in the Fe-based electroplated layer is 100 mass ppm or more, preferably 500 mass ppm or more, and more preferably 1000 mass ppm or more.

Meanwhile, the content of the transition metal in the Fe-based electroplated layer is 10,000 mass ppm or less, preferably 8500 mass ppm or less, more preferably 7000 mass ppm or less, and still more preferably 5000 mass ppm or less.

The transition metal contained in the Fe-based electroplated layer is preferably at least one selected from the group consisting of Ti, V, Cr, Mn, Ni, Cu, Nb, Mo, and W, and more preferably at least one selected from the group consisting of Ti, V, Cr, Mn, Ni, and Cu.

The content of the transition metal in the Fe-based electroplated layer is measured as follows.

First, using a glow discharge optical emission spectrometer (GDS), measured are the intensity of Fe and the intensities of the transition metal elements of a steel sheet in which contents of a plurality of transition metal elements have been known, and the intensities of the transition metal elements are normalized by the intensity of Fe. Specifically, the ratio of the intensity of the transition metal element to the intensity of Fe (intensity of transition metal element/intensity of Fe) is determined. Furthermore, the relationship between the content of the transition metal element and the intensity normalized by the intensity of Fe is determined in advance.

Then, the intensity of the transition metal element in the Fe-based electroplated layer included in a measurement object (Fe-based electroplated steel sheet) normalized by the intensity of Fe (average strength) is determined in the same manner. Then, the content of the transition metal element in the Fe-based electroplated layer is determined from the thus determined intensity with reference to the above relationship.

When the measurement object is a hot-dip galvanized steel sheet, the hot-dip galvanized layer is peeled off using a test solution specified in JIS H0401 or ISO 17925, and the content of the transition metal element in the Fe-based electroplated layer is then determined in the same manner.

### [Hot-Dip Galvanized Steel Sheet and Method for Producing the Same]

Next, a hot-dip galvanized steel sheet and a method for producing the same will be described.

The Fe-based electroplated steel sheet obtained through the above-described annealing treatment is subjected to a hot-dip galvanizing treatment. Thus, a hot-dip galvanized steel sheet is obtained.

The hot-dip galvanizing treatment is, for example, a treatment in which an Fe-based electroplated steel sheet is cooled after an annealing treatment, and then immersed in a hot-dip galvanizing bath to form a hot-dip galvanized layer on the Fe-based electroplated layer.

The hot-dip galvanizing bath is normally made of Al, Zn, and inevitable impurities.

The in-bath Al concentration in the hot-dip galvanizing bath is preferably 0.050 mass% or more, and more preferably 0.100 mass% or more. This makes it possible to prevent the occurrence of bottom dross to prevent defects due to the adhesion of the dross.

Meanwhile, the in-bath Al concentration in the hot-dip galvanizing bath is preferably 0.250 mass% or less, and more preferably 0.200 mass% or less. This makes it possible to prevent an increase of top dross to prevent defects due to the adhesion of the dross. This also leads to cost reduction.

The other conditions for the hot-dip galvanizing treatment are not particularly limited.

The bath temperature of the hot-dip galvanizing bath is normally in a range of 440 to 500°C. For example, an Fe-based electroplated steel sheet having a sheet temperature of 440 to 550°C is immersed in the hot-dip galvanizing bath having such a bath temperature.

The coating amount of the hot-dip galvanized layer per one surface of the base steel sheet (hereinafter, also simply referred to as "coating amount of hot-dip galvanized layer") is preferably 25 g/m² or more, and more preferably 30 g/m² or more. This makes it possible to improve the corrosion resistance of the obtained hot-dip galvanized steel sheet. In this case, it is easy to control the coating amount of the hot-dip galvanized layer.

Meanwhile, the coating amount of the hot-dip galvanized layer is preferably 80 g/m² or less, and more preferably 75 g/m² or less, for the reason that the adhesion of the hot-dip galvanized layer is good.

After the hot-dip galvanizing treatment, the coating amount of the hot-dip galvanized layer may be appropriately adjusted.

The adjusting method is not particularly limited, but generally gas wiping is used. In this case, for example, the coating amount of the hot-dip galvanized layer is adjusted by adjusting the gas pressure of the gas wiping, and a distance between a wiping nozzle and a steel sheet, and the like.

The coating amount of the hot-dip galvanized layer is measured in accordance with JIS H0401 or ISO 17925.

Specifically, first, a sample having a size of 20 × 25 mm is collected from a hot-dip galvanized steel sheet. After the mass of the sample is measured, the hot-dip galvanized layer on one side is peeled off using a test solution specified in JIS H0401 or ISO 17925, and the mass of the sample is measured again. The mass after peeling is subtracted from the mass before peeling, and the obtained value is divided by the surface area of the peeled portion. Thus, the coating amount of the hot-dip galvanized layer is calculated.

After the hot-dip galvanizing treatment, an alloying treatment may be further performed as necessary.

In the present description, the hot-dip galvanized layer subjected to the alloying treatment (so-called "alloyed hot-dip galvanized layer") is also simply referred to as hot-dip galvanized layer.

Similarly, the hot-dip galvanized steel sheet subjected to the alloying treatment (so-called "alloyed hot-dip galvanized steel sheet") is also simply referred to as hot-dip galvanized steel sheet.

The conditions for the alloying treatment are not particularly limited, but the alloying temperature is preferably 460°C or higher, and more preferably 480°C or higher, from the viewpoint of proceeding the alloying.

Meanwhile, when the alloying temperature is too high, the adhesion of the hot-dip galvanized layer may be deteriorated, or the mechanical properties of the hot-dip galvanized steel sheet may be deteriorated. For this reason, the alloying temperature is preferably 600°C or lower, and more preferably 540°C or lower.

The alloying treatment time (heating time at the alloying temperature) is not particularly limited, and is, for example, 10 to 60 seconds.

In the case of the alloying treatment is performed, when the degree of alloying of the hot-dip galvanized layer (Fe % in the hot-dip galvanized layer) is too low, alloying unevenness may occur to deteriorate the appearance, or a so-called ζ phase may be generated to deteriorate the slidability. For this reason, the degree of alloying is preferably 7.0 mass% or more, and more preferably 8.0 mass% or more.

Meanwhile, when the degree of alloying is too high, a large amount of hard and brittle Γ phase is generated, and therefore the adhesion of the hot-dip galvanized layer may be deteriorated. For this reason, the degree of alloying is preferably 15.0 mass% or less, and more preferably 13.0 mass% or less.

The degree of alloying (Fe %) is measured in accordance with ISO 17925. Specifically, the test solution after the hot-dip galvanized layer is peeled off is analyzed using an inductively coupled plasma (ICP) emission spectrometer, and the amount of Fe is divided by the total value of Fe, Zn, and Al and the like contained in the test solution to calculate Fe %.

### [Evaluation Test of Resistance to Resistance-Weld Cracking of Welded Portion]

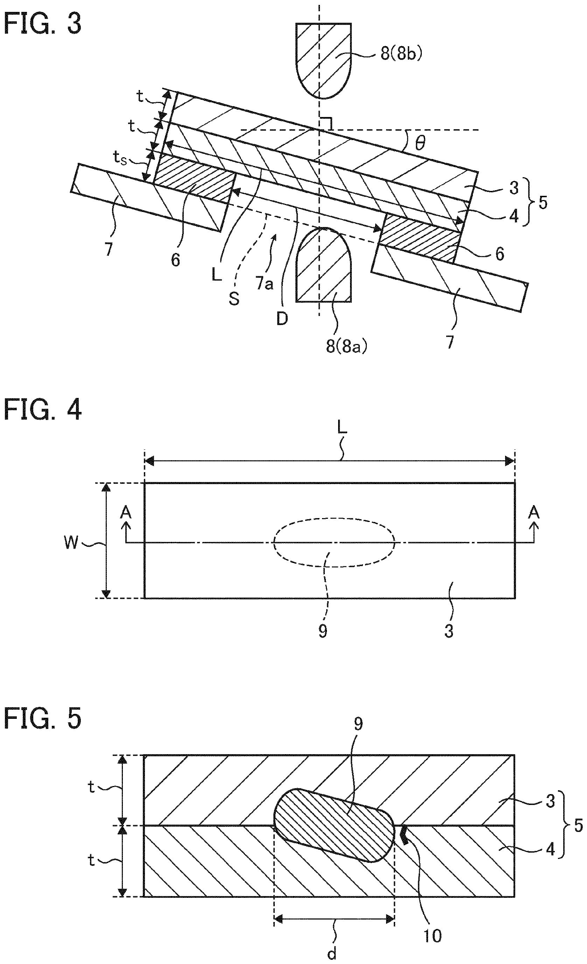

A test method for evaluating the resistance to resistance-weld cracking of the welded portion will be described with reference to FIGS. 3 to 5.

FIG. 3 is a cross-sectional view showing a sheet assembly 5 used in resistance welding. FIG. 4 is a plan view showing the sheet assembly 5 after resistance welding. FIG. 5 is a cross-sectional view taken along line A-A of FIG. 4.

First, a test piece 4 is cut out from an Fe-based electroplated steel sheet (or hot-dip galvanized steel sheet) to be evaluated. The test piece 4 has a length L of 150 mm in a longitudinal direction, a width W of 50 mm being a length in a transverse direction, and a sheet thickness t of 1.6 mm, with a direction perpendicular to a rolling direction (TD) being the longitudinal direction and the rolling direction being the transverse direction.

Similarly, a counterpart test piece 3 of the same size is cut out from another hot-dip galvanized steel sheet.

The surface to be evaluated (Fe-based electroplated layer or hot-dip galvanized layer) of the test piece 4 and the hot-dip galvanized layer of the counterpart test piece 3 are brought into contact with each other to obtain the sheet assembly 5.

The sheet assembly 5 is fixed to a fixing base 7 via a pair of spacers 6 (length in longitudinal direction: 50 mm, length in transverse direction: 45 mm, thickness tₛ: 2.0 mm) which are steel sheets. The spacers 6 are disposed such that their longitudinal end surfaces are aligned with both transverse end surfaces of the sheet assembly 5. For this constitution, a distance D between the pair of spacers 6 is 60 mm. The fixing base 7 is a single plate having a hole 7a in the central portion.

Then, in a state where the sheet assembly 5 is warped while the sheet assembly 5 is pressurized by a pair of electrodes 8 (tip diameter: 6 mm), resistance welding is performed using a single-phase alternating current (50 Hz) resistance welding machine of a servo motor pressurization type.

More specifically, the resistance welding is performed at a welding current at which a predetermined nugget diameter d is achieved under the predetermined conditions (pressurizing force, hold time, and welding time) to form a welded portion including a nugget 9.

The hold time refers to a time from the end of application of the welding current to the start of opening the electrodes 8.

The nugget diameter d is a distance between the end portions of the nugget 9 in the longitudinal direction of the sheet assembly 5.

The range of the nugget diameter d in which the problem of the internal cracks is apt to occur is, for example, 4Vt to 5Vt based on the plate thickness t of the test piece 4.

During resistance welding, the pair of electrodes 8 pressurize the sheet assembly 5 from above and below in a vertical direction.

A lower electrode 8a pressurizes the test piece 4 through the hole 7a of the fixing base 7. During pressurization, a lower electrode 8a and the fixing base 7 are fixed at a position where the lower electrode 8a is in contact with a virtual plane S obtained by extending a contact surface between the spacer 6 and the fixing base 7. The upper electrode 8b is movable at a position where the upper electrode 8b can be brought into contact with the central portion of the counterpart test piece 3.

The resistance welding is performed in a state where the sheet assembly 5 is inclined by 5° to the longitudinal direction side of the sheet assembly 5 with respect to a horizontal direction (that is, an angle θ with respect to the horizontal direction is set to 5°).

The sheet assembly 5 after resistance welding is cut along line A-A in FIG. 4 such that the center of the welded portion including the nugget 9 is also cut. The cross section of the welded portion is observed using an optical microscope (200 times) to evaluate the resistance to resistance-weld cracking of the welded portion.

FIG. 5 schematically shows a crack 10 generated in the test piece 4.

When a crack occurs in the counterpart test piece 3, the stress of the test piece 4 is dispersed, and appropriate evaluation cannot be obtained. For this reason, data of a case where no crack occurs in the counterpart test piece 3 is adopted.

### EXAMPLES

Hereinafter, the present invention will be specifically described with reference to Examples.
However, the present invention is not limited to Examples described below.

### <Method for Producing Hot-Dip Galvanized Steel Sheet>

### <<Preparation of Base Steel Sheet>>

A slab obtained by smelting steel having a chemical composition containing elements shown in the following Table 1, with a remaining part consisting of Fe and inevitable impurities was subjected to hot rolling, pickling, and cold rolling to obtain a cold-rolled steel sheet before annealing having a sheet thickness of 1.6 mm. The obtained cold-rolled steel sheet before annealing was used as the base steel sheet.

### <<Fe-Based Electroplating Treatments

Then, the base steel sheet was subjected to degreasing in an alkaline solution, and then subjected to an electrolytic treatment (Fe-based electroplating treatment) with the base steel sheet serving as a cathode, using an Fe-based electroplating solution shown in the following Table 2 under the following conditions. Thus, an Fe-based electroplated steel sheet before annealing in which an Fe-based electroplated layer was formed on each of both front and back surfaces of the base steel sheet was obtained. The coating amount of the Fe-based electroplated layer was controlled by adjusting an energization time.

### (Conditions of Fe-Based Electroplating Treatment)

Temperature of Fe-based electroplating solution: 50°C
pH of Fe-based electroplating solution: 2.0
Current density: 50 A/dm²
Electrode (anode): iridium oxide electrode

### <<Annealing Treatment>>

Then, the obtained Fe-based electroplated steel sheet before annealing was subjected to an annealing treatment.

Specifically, the Fe-based electroplated steel sheet before annealing was heated at 800°C for 85 seconds in a reducing atmosphere having a dew point of -35°C and a hydrogen concentration of 15 vol% (remaining part: nitrogen).

Thus, an Fe-based electroplated steel sheet was obtained.

### <<Hot-Dip Galvanizing Treatments

The obtained Fe-based electroplated steel sheet was subjected to a hot-dip galvanizing treatment to obtain a hot-dip galvanized steel sheet.

More specifically, the Fe-based electroplated steel sheet was cooled to 440 to 550°C, and then immersed in a hot-dip galvanizing bath of 460°C in which the in-bath Al concentration was 0.132 mass% and a remaining part consisted of Zn and inevitable impurities, to form a hot-dip galvanized layer. The coating amount of the hot-dip galvanized layer was adjusted using gas wiping after the hot-dip galvanizing treatment.

In some examples, an alloying treatment was subsequently performed at an alloying temperature of 510°C. A degree of alloying was adjusted by changing the time of the alloying treatment. For the examples in which the alloying treatment was performed, the degree of alloying (unit: mass%) was described in the following Table 2.

The coating amount, the average crystal grain size, and the transition metal content of the Fe-based electroplated layer of the obtained hot-dip galvanized steel sheet were determined.

The coating amount and the degree of alloying of the hot-dip galvanized layer of the obtained hot-dip galvanized steel sheet were determined.

Furthermore, the tensile strength of the obtained hot-dip galvanized steel sheet was determined.

The results are shown in the following Table 2.

### <Resistance to Resistance-Weld Cracking of Welded Portion>

A test piece was cut out from the obtained hot-dip galvanized steel sheet, and the resistance to resistance-weld cracking of the welded portion was evaluated according to the test method described with reference to FIGS. 3 to 5.

A counterpart test piece was cut out from an alloyed hot-dip galvanized steel sheet for test (sheet thickness t: 1.6 mm) having tensile strength of grade 980 MPa and a hot-dip galvanized layer coating amount of 50 g/m².

A sheet assembly of the test piece and the counterpart-side test piece was subjected to resistance welding with the angle θ being 5° under the conditions of a pressurizing force of 3.5 kN, a hold time of 0.10 seconds or 0.16 seconds, and a welding current and a welding time at which a nugget diameter d was 5.9 mm, to form a welded portion.

The cross section of the welded portion was observed, and the resistance to resistance-weld cracking of the welded portion was evaluated according to the following criteria.

In the case of "Superior" or "Good," the resistance to resistance-weld cracking of the welded portion was determined to be excellent. The results are shown in the following Table 2.
Superior: No cracks having a length of 0.1 mm or more were observed with a hold time of 0.10 seconds.
Good: Cracks having a length of 0.1 mm or more were observed with a hold time of 0.10 seconds, but cracks having a length of 0.1 mm or more were not observed with a hold time of 0.16 seconds.
Poor: Cracks having a length of 0.1 mm or more were observed with a hold time of 0.16 seconds.

In the following Tables 1 and 2, underlines indicate that they are outside the scope of the present invention.

### [Table 1]

**Table 1**

| Steel | C | Si | Mn | P | S | N | Al | B | Ti | Mo | Cu | Ni | Remarks |
|---|---|---|---|---|---|---|---|---|---|---|---|---|---|
| A | 0.18 | 0.41 | 1.55 | 0.020 | 0.0020 | 0.0040 | 0.039 | 0.0010 | 0.010 | - | - | - | Comparative Example |
| B | 0.15 | 0.91 | 2.16 | 0.020 | 0.0020 | 0.0040 | 0.036 | 0.0010 | 0.010 | - | - | - | Inventive Example |
| C | 0.18 | 1.02 | 308 | 0.020 | 0.0020 | 0.0060 | 0.038 | 0.0010 | 0.010 | - | - | - | Inventive Example |
| D | 0.12 | 1.20 | 1.85 | 0.010 | 0.0010 | 0.0040 | 0.032 | 0.0010 | 0.010 | - | - | - | Inventive Example |
| E | 0.24 | 1.41 | 1.33 | 0.010 | 0.0010 | 0.0030 | 0.034 | 0.0010 | 0.010 | | - | - | Inventive Example |
| F | 0.13 | 1.39 | 1.94 | 0.010 | 0.0010 | 0.0070 | 0.033 | 0.0010 | 0.010 | - | - | - | Inventive Example |
| G | 0.12 | 1.49 | 1.52 | 0.010 | 0.0010 | 0.0030 | 0.035 | 0.0010 | 0.010 | - | - | - | Inventive Example |
| H | 0.17 | 1.53 | 2.31 | 0.010 | 0.0010 | 0.0040 | 0.037 | 0.0010 | 0.010 | 0.110 | - | - | Inventive Example |
| I | 0.19 | 1.51 | 2.72 | 0.010 | 0.0010 | 0.0040 | 0.034 | 0.0010 | 0.010 | - | 0.120 | - | Inventive Example |
| J | 0.15 | 1.65 | 1.53 | 0.020 | 0.0020 | 0.0050 | 0.036 | 0.0010 | 0.010 | - | - | 0.140 | Inventive Example |
| K | 0.17 | 1.68 | 2.51 | 0.030 | 0.0020 | 0.0040 | 0.036 | 0.0010 | 0.010 | - | - | - | Inventive Example |

### [Table 2]

**Table 2 (1/2)**

| No. | Steel | Fe-based electroplating solution | | | Fe-based electroplated layer | | | | Hot-dip-galvanized layer | | Tensile strength TS | Resistance to resistance-weld cracking of welded portion | Remarks |
|---|---|---|---|---|---|---|---|---|---|---|---|---|---|
| | | Fe ions | Transition metal ions | | Coating amount | Average crystal grain size | Transition metal | | Coating amount | Degree of alloying (Fe %) | | | |
| | | Content | Type | Content | | | Type | Content | | | | | |
| | | Mass% | | Mass ppm | g/m² | µm | | Mass ppm | g/m² | Mass% | MPa | | |
| 1 | A | 5.0 | Ti | 100 | 1.1 | 0.31 | Ti | 800 | 48 | - | 581 | Good | Comparative Example |
| 2 | A | 5.0 | Mn | 50 | 3.2 | 0.83 | Mn | 420 | 50 | - | 564 | Good | Comparative Example |
| 3 | B | 5.0 | - | 0 | 5.3 | 1.67 | - | 0 | 43 | - | 964 | Poor | Comparative Example |
| 4 | B | 5.0 | Ti | 5 | 7.4 | 2.50 | Ti | 50 | 49 | - | 945 | Poor | Comparative Example |
| 5 | B | 5.0 | Ti | 20 | 1.3 | 0.83 | Ti | 330 | 46 | - | 954 | Good | Inventive Example |
| 6 | B | 5.0 | Ti | 20 | 0.9 | 0.71 | Ti | 350 | 52 | - | 945 | Poor | Comparative Example |
| 7 | B | 5.0 | Ti | 20 | 5.7 | 0.83 | Ti | 260 | 50 | - | 970 | Good | Inventive Example |
| 8 | B | 5.0 | Ti | 20 | 13.5 | 1.00 | Ti | 430 | 54 | - | 963 | Good | Inventive Example |
| 9 | B | 3.0 | Ti | 20 | 7.5 | 0.83 | Ti | 300 | 45 | 7.5 | 941 | Good | Inventive Example |
| 10 | B | 3.0 | Ti | 20 | 6.1 | 0.83 | Ti | 230 | 49 | 14.4 | 930 | Good | Inventive Example |
| 11 | C | 5.0 | Ni | 200 | 9.5 | 0.38 | Ni | 1230 | 53 | - | 1176 | Superior | Inventive Example |
| 12 | C | 5.0 | Ti | 100 | 7.1 | 0.31 | Ti | 770 | 53 | - | 1194 | Superior | Inventive Example |
| 13 | C | 5.0 | Mn | 600 | 6.5 | 0.56 | Mn | 3120 | 58 | - | 1185 | Superior | Inventive Example |
| 14 | C | 5.0 | Cu | 300 | 3.2 | 0.56 | Cu | 2290 | 51 | - | 1197 | Good | Inventive Example |
| 15 | C | 5.0 | - | 0 | 3.4 | 1.67 | - | Q | 47 | - | 1189 | Poor | Comparative Example |
| 16 | C | 5.0 | Ti | 30 | 5.7 | 0.63 | Ti | 510 | 47 | 9.4 | 1154 | Superior | Inventive Example |
| 17 | C | 5.0 | Ni | 60 | 7.6 | 0.71 | Ni | 400 | 47 | 12.6 | 1140 | Good | Inventive Example |
| 18 | D | 5.0 | - | 0 | 4.9 | 5.00 | - | Q | 53 | - | 867 | Poor | Comparative Example |
| 19 | D | 0.5 | Ti | 300 | 0.8 | 0.24 | Ti | 1930 | 55 | - | 855 | Poor | Comparative Example |
| 20 | D | 2.0 | Ti | 300 | 3.9 | 0.23 | Ti | 2150 | 45 | - | 874 | Good | Inventive Example |
| 21 | D | 5.0 | Ti | 300 | 7.1 | 0.29 | Ti | 2090 | 47 | - | 867 | Superior | Inventive Example |
| 22 | D | 8.0 | Ti | 300 | 8.5 | 0.33 | Ti | 1900 | 50 | - | 859 | Superior | Inventive Example |
| 23 | E | 5.0 | Ni | 500 | 0.5 | 0.45 | Ni | 2130 | 34 | - | 836 | Poor | Comparative Example |
| 24 | E | 5.0 | Ni | 500 | 1.2 | 0.38 | Ni | 1890 | 26 | - | 849 | Good | Inventive Example |
| 25 | E | 5.0 | Ni | 500 | 4.0 | 0.42 | Ni | 2210 | 46 | - | 851 | Good | Inventive Example |
| 26 | E | 5.0 | Ni | 500 | 6.7 | 0.50 | Ni | 2150 | 42 | - | 835 | Superior | Inventive Example |
| 27 | E | 5.0 | Ni | 500 | 10.3 | 0.38 | Ni | 2070 | 60 | - | 843 | Superior | Inventive Example |
| 28 | E | 8.0 | Ni | 500 | 15.0 | 0.38 | Ni | 1960 | 42 | - | 840 | Superior | Inventive Example |
| 29 | E | 5.0 | Ni | 500 | 19.2 | 0.36 | Ni | 2000 | 43 | - | 833 | Superior | Inventive Example |
| 30 | F | 8.0 | - | 0 | 7.0 | 2.50 | - | 0 | 53 | - | 948 | Poor | Comparative Example |
| 31 | F | 8.0 | Ti | 100 | 5.3 | 0.28 | Ti | 660 | 44 | - | 948 | Superior | Inventive Example |
| 32 | F | 8.0 | Ti | 500 | 5.1 | 0.22 | Ti | 2610 | 48 | - | 951 | Superior | Inventive Example |
| 33 | F | 8.0 | Ti | 900 | 4.5 | 0.25 | Ti | 4340 | 51 | - | 941 | Good | Inventive Example |
| 34 | F | 8.0 | Ti | 1200 | 0.7 | 0.21 | Ti | 5300 | 48 | - | 965 | Poor | Comparative Example |
| 35 | F | 8.0 | Ti | 300 | 5.1 | 0.36 | Ti | 1540 | 52 | 12.3 | 943 | Superior | Inventive Example |
| 36 | F | 8.0 | Ti | 300 | 7.6 | 0.28 | Ti | 2340 | 52 | 8.2 | 963 | Superior | Inventive Example |
| 37 | F | 8.0 | Ti | 300 | 16.9 | 0.23 | Ti | 1840 | 51 | 10.6 | 958 | Superior | Inventive Example |
| 38 | F | 8.0 | Ti | 300 | 6.4 | 0.24 | Ti | 1950 | 58 | 14.7 | 932 | Superior | Inventive Example |
| 39 | G | 5.0 | Mn | 500 | 6.1 | 0.56 | Mn | 1700 | 54 | - | 849 | Superior | Inventive Example |
| 40 | G | 5.0 | Cu | 500 | 7.6 | 0.63 | Cu | 1460 | 52 | - | 855 | Superior | Inventive Example |
| 41 | G | 5.0 | Mn | 500 | 9.1 | 0.50 | Mn | 1630 | 57 | 10.6 | 831 | Superior | Inventive Example |
| 42 | G | 5.0 | Mn | 500 | 4.6 | 0.56 | Mn | 1640 | 56 | 13.6 | 825 | Good | Inventive Example |
| 43 | H | 5.0 | Cr | 50 | 8.0 | 1.00 | Cr | 230 | 52 | - | 997 | Good | Inventive Example |
| 44 | H | 5.0 | V | 500 | 6.4 | 0.50 | V | 1860 | 58 | - | 1023 | Superior | Inventive Example |
| 45 | I | 2.0 | Ni | 200 | 3.4 | 0.45 | Ni | 1040 | 53 | - | 1049 | Good | Inventive Example |
| 46 | I | 2.0 | Ti | 300 | 0.5 | 0.21 | Ti | 1990 | 49 | - | 1056 | Poor | Comparative Example |
| 47 | J | 5.0 | Cu | 300 | 6.5 | 0.63 | Cu | 1630 | 55 | - | 864 | Superior | Inventive Example |
| 48 | J | 5.0 | Mn | 50 | 5.6 | 0.83 | Mn | 460 | 61 | - | 879 | Good | Inventive Example |
| 49 | K | 5.0 | V | 200 | 5.1 | 0.50 | V | 940 | 67 | - | 1045 | Superior | Inventive Example |
| 50 | K | 5.0 | Ti | 50 | 8.4 | 0.63 | Ti | 650 | 72 | - | 1030 | Superior | Inventive Example |

### <Summary of Evaluation Results>

As shown in Tables 1 and 2, all of the hot-dip galvanized steel sheets of Nos. 5, 7 to 14, 16 and 17, 20 to 22, 24 to 29, 31 to 33, 35 to 45, and 47 to 50 had high strength (tensile strength of 590 MPa or more) and was excellent resistance to resistance-weld cracking of the welded portion.

Among them, the hot-dip galvanized steel sheets (Nos. 11 to 13, 16, 21 and 22, 26 to 29, 31 and 32, 35 to 41, 44, 47, and 49 and 50) in which the coating amount of the Fe-based electroplated layer was 5.0 g/m² or more and the average crystal grain size was 0.70 um or less had more excellent resistance to resistance-weld cracking of the welded portion than that of the hot-dip galvanized steel sheets (Nos. 5, 7 to 10, 14, 17, 20, 24 and 25, 33, 42 and 43, 45, and 48) in which the coating amount of the Fe-based electroplated layer was 1.0 g/m² or more and less than 5.0 g/m² and/or the average crystal grain size was more than 0.70 um and 1.00 um or less.

Meanwhile, the hot-dip galvanized steel sheets of Nos. 1 and 2 had tensile strength of less than 590 MPa, and therefore the hot-dip galvanized steel sheets had insufficient strength.

The hot-dip galvanized steel sheets of Nos. 3 and 4, 6, 15, 18 and 19, 23, 30, 34, and 46 had insufficient resistance to resistance-weld cracking of the welded portion.

### DESCRIPTION OF SYMBOLS

- 1: base steel sheet
- 2: Fe-based electroplated layer
- 3: counterpart test piece
- 4: test piece
- 5: sheet assembly
- 6: spacer
- 7: fixing base
- 7a: hole
- 8, 8a, 8b: electrode
- 9: nugget
- 10: crack

## Claims

1. A method for producing an Fe-based electroplated steel sheet, the method comprising:
subjecting a base steel sheet containing Si in an amount of 0.50 to 3.00 mass% to an Fe-based electroplating treatment using an Fe-based electroplating solution containing Fe ions and transition metal ions other than the Fe ions to form an Fe-based electroplated layer, and then subjecting the base steel sheet to an annealing treatment,
wherein, in the Fe-based electroplating solution, a content of the Fe ions is 1.0 mass% or more and a content of the transition metal ions is 10 to 1000 mass ppm, and
a coating amount of the Fe-based electroplated layer per one surface of the base steel sheet is 1.0 g/m² or more.

2. The method for producing an Fe-based electroplated steel sheet according to claim 1,
wherein the base steel sheet has a chemical composition containing,
Si in an amount of 0.50 mass% or more and 3.00 mass% or less,
C in an amount of 0.80 mass% or less,
Mn in an amount of 1.50 mass% or more and 3.50 mass% or less,
P in an amount of 0.100 mass% or less,
S in an amount of 0.0300 mass% or less, and
Al in an amount of 0.100 mass% or less, with a remaining part consisting of Fe and inevitable impurities.

3. The method for producing an Fe-based electroplated steel sheet according to claim 2,
wherein the chemical composition further contains at least one element selected from the group consisting of:
B in an amount of 0.0050 mass% or less,
Ti in an amount of 0.200 mass% or less,
N in an amount of 0.0100 mass% or less,
Cr in an amount of 1.000 mass% or less,
Cu in an amount of 1.000 mass% or less,
Ni in an amount of 1.000 mass% or less,
Mo in an amount of 1.000 mass% or less,
Nb in an amount of 0.200 mass% or less,
V in an amount of 0.500 mass% or less,
Sb in an amount of 0.200 mass% or less,
Ta in an amount of 0.100 mass% or less,
W in an amount of 0.500 mass% or less,
Zr in an amount of 0.1000 mass% or less,
Sn in an amount of 0.200 mass% or less,
Ca in an amount of 0.0050 mass% or less,
Mg in an amount of 0.0050 mass% or less, and
REM in an amount of 0.0050 mass% or less.

4. The method for producing an Fe-based electroplated steel sheet according to any one of claims 1 to 3, wherein the transition metal ions contained in the Fe-based electroplating solution are ions of at least one transition metal selected from the group consisting of Ti, V, Cr, Mn, Ni, Cu, Nb, Mo, and W.

5. The method for producing an Fe-based electroplated steel sheet according to any one of claims 1 to 3, wherein a coating amount of the Fe-based electroplated layer per one surface of the base steel sheet is 5.0 to 20.0 g/m².

6. A method for producing a hot-dip galvanized steel sheet, the method comprising subjecting an Fe-based electroplated steel sheet obtained by the method according to any one of claims 1 to 3 to a hot-dip galvanizing treatment.

7. The method for producing a hot-dip galvanized steel sheet according to claim 6, further comprising subjecting the Fe-based electroplated steel sheet to an alloying treatment after the hot-dip galvanizing treatment.

8. An Fe-based electroplated steel sheet comprising:
a base steel sheet containing Si in an amount of 0.50 to 3.00 mass%; and
an Fe-based electroplated layer disposed on at least one surface of the base steel sheet,
wherein a coating amount of the Fe-based electroplated layer per one surface of the base steel sheet is 1.0 g/m² or more,
an average crystal grain size of the Fe-based electroplated layer at an interface between the Fe-based electroplated layer and the base steel sheet is 1.00 µm or less,
the Fe-based electroplated layer contains a transition metal other than Fe, and
a content of the transition metal in the Fe-based electroplated layer is 100 to 10000 mass ppm.

9. The Fe-based electroplated steel sheet according to claim 8, wherein the transition metal is at least one transition metal selected from the group consisting of Ti, V, Cr, Mn, Ni, Cu, Nb, Mo, and W.

10. The Fe-based electroplated steel sheet according to claim 8 or 9, wherein the Fe-based electroplated steel sheet is resistance-welded with a hot-dip galvanized steel sheet.

11. A hot-dip galvanized steel sheet comprising:
the Fe-based electroplated steel sheet according to claim 8 or 9; and
a hot-dip galvanized layer disposed on the Fe-based electroplated layer included in the Fe-based electroplated steel sheet.
